## Europäisches Patentamt

## European Patent Office

## Office européen des brevets

(19)

(11) Veröffentlichungsnummer: **0 532 863 B1**

(12) **EUROPÄISCHE PATENTSCHRIFT**

(45) Veröffentlichungstag der Patentschrift: **27.09.95**

(51) Int. Cl.⁶: **B60T 13/66**

(21) Anmeldenummer: **92112841.9**

(22) Anmeldetag: **28.07.92**

(54) **Verfahren zur Bremsdruckregelung für ein Anhängefahrzeug, welches mit einem Zugfahrzeug mit elektronisch gesteuerter Druckmittelbremse verbunden ist.**

(30) Priorität: **17.09.91 DE 4130848**

(43) Veröffentlichungstag der Anmeldung:
**24.03.93 Patentblatt 93/12**

(45) Bekanntmachung des Hinweises auf die Patenterteilung:
**27.09.95 Patentblatt 95/39**

(84) Benannte Vertragsstaaten:
**FR GB IT NL SE**

(56) Entgegenhaltungen:
**DE-A- 3 037 229**
**DE-A- 3 901 270**
**DE-B- 2 164 325**
**GB-A- 2 196 074**

(73) Patentinhaber: **MERCEDES-BENZ AG**
**Mercedesstrasse 136**
**D-70327 Stuttgart (DE)**

(72) Erfinder: **Töpfer, Bernhard, Dr.-Ing.**
**Im Weingarten 41**
**W-7000 Stuttgart 60 (DE)**

EP 0 532 863 B1

## Beschreibung

Die Erfindung bezieht sich auf ein verfahren zur Bremsdruckregelung für ein Anhängefahrzeug, welches mit einem Zugfahrzeug mit elektronisch gesteuerter Druckmittelbremse verbunden ist nach der Gattung des Anspruchs 1; dabei sind unter Anhängefahrzeug sowohl Deichselanhänger als auch Sattelauflieger zu verstehen.

Bei Fahrzeugkombinationen mit herkömmlichen Druckluft-Bremsanlagen soll eine gleichmäßige Beteiligung von Zugwagen und Anhängefahrzeug an der Bremsarbeit durch vorgeschriebene Abbremsungsbänder erreicht werden, d.h. die Bremswirkung sowohl des Zugwagens als auch die des Anhängefahrzeugs muß, bezogen auf den als Referenz verwendeten Druck am Anhängeranschluß, innerhalb gewisser Bandgrenzen liegen. Diese Grenzen sind mit Rücksicht auf verschiedene Einschränkungen konventioneller Bremsanlagen relativ weit gezogen. In der Praxis führt dies dann zu teilweise erheblich falschen Bremskraftverteilungen, vor allem im Bereich der häufig vorkommenden Anpassungsabbremsungen auf relativ niedrigem Verzögerungsniveau. Als Folge ergeben sich unter anderem extreme Unterschiede zwischen Zugwagen und Anhängefahrzeug hinsichtlich des Bremsbelagverschleißes.

Bei elektro-pneumatischen Bremsanlagen, d.h. elektrisch/elektronisch gesteuerten Bremsanlagen mit druckluftbetätigten Radbremsen, wird eine Verbesserung der Verhältnisse durch sog. Koppelkraft-Regelungen angestrebt. Gegenstand dieser Regelungen ist eine Erkennung von "falschen" Bremsdruckverteilungen und eine Beeinflussung des im Zugwagen befindlichen Anhängersteuerventils dahingehend, daß die Kräfte zwischen Zugwagen und Anhängefahrzeug minimiert werden.

Beispielhaft ist in der DE-OS 39 01 270 eine Druckluftbremseinrichtung für Kraftfahrzeuge beschrieben, bei der zur Abstimmung der Bremswirkung zwischen Zugwagen und Anhänger an einer mechanischen Verbindungseinrichtung der Fahrzeuge ein Sensor angeordnet ist, der die dort auftretenden Kräfte mißt und ein Korrekturventil ansteuert, das an die Anhängervorratsleitung angeschlossen ist. Dabei geschieht diese Ansteuerung über ein Steuergerät, in welchem ein Regelalgorithmus installiert ist, mit dem ein Druckwert aufnehmbar und modifizierbar ist und von dem Signale abgebbar sind, mit denen ein bestimmter Druck in der Anhängerbremsleitung einstellbar ist.

Auch die DE-AS 21 64 325 beschreibt eine Vorrichtung zur Regelung der Bremskraft an den Rädern von Kraftfahrzeug-Anhängern durch Beeinflussung des Bremsmitteldruckes für den Anhänger. Dabei wird diese Beeinflussung in Abhängigkeit von bestimmten Signalen eines Meßgliedes, welches in der Verbindung zwischen Zugfahrzeug und Anhänger zur Messung der dort auftretenden Kraft vorgesehen ist, vorgenommen.

Koppelkraftsensoren für rauhen Betrieb, wie sie diese Vorrichtung bzw. Einrichtung und entsprechende Bremsverfahren voraussetzen, sind jedoch aufwendig und müssen beständig überprüft werden.

Es ist daher Aufgabe der Erfindung, ein Verfahren zur Bremsdruckregelung für ein Anhängefahrzeug, welches mit einem Zugfahrzeug mit elektronisch gesteuerter Druckmittelbremse verbunden ist, anzugeben, das ohne Sensierung der Kräfte zwischen Zugwagen und Anhängefahrzeug auskommt. Es sollen also entsprechende Koppelkraftsensoren verzichtbar werden, und das Verfahren soll insbesondere in Verbindung mit modernen, elektronisch gesteuerten ABS-Fremdkraft-Bremsanlagen in Zugfahrzeugen universell anwendbar sein.

Diese Aufgabe wird bei einem gattungsgemäßen Verfahren zur Bremsdruckregelung an einem Anhängefahrzeug mit den kennzeichnenden Merkmalen gemäß Anspruch 1 gelöst.

Demgemäß erübrigt das Verfahren in vorteilhafter Weise ein die Koppelkraft zwischen Zugfahrzeug und Anhängefahrzeug erfassendes Mittel, indem eine Regelung derart vorgenommen wird, daß die mittlere Kraftschlußausnutzung an den Achsen des Anhängefahrzeugs ebenso groß ausfällt wie an denen des Zugfahrzeugs. Dieses Ziel wird vermöge einer Übertragung von Raddrehgeschwindigkeitssignalen vom Anhängefahrzeug zum Zugfahrzeug erreicht, indem so letztlich auf gleiche, ggfs. normierte mittlere Drehgeschwindigkeiten der Räder aller Achsen geregelt wird und der Bremsdruck für das Anhängefahrzeug im Sinn einer auf das Zugfahrzeug und das Anhängefahrzeug optimal verteilten Bremsarbeit nachgeführt bzw. aktualisiert wird.

Ausgehend von einem festen Ausgangswert für die Bremsdruckverteilung zwischen Zug- und Anhängefahrzeug wird jedem aktuellen Regeleingriff eine adaptive Vorausbestimmung der 'richtigen' Verteilung der Bremskraft, und insoweit der Relation der Bremsdruckniveaus im Zugfahrzeug und im Anhängefahrzeug unterlagert. In vorteilhafter Weise wird dadurch im Bereich üblicher Abbremsungen die Notwendigkeit aktueller Eingriffe minimiert. Dazu wird schon vor dem Auftreten großer Raddrehgeschwindigkeitsdifferenzen zwischen den Achsen des Zug- und des Anhängefahrzeugs - in Abhängigkeit von der am Bremspedal vom Fahrer angeforderten Abbremsungshöhe - die jeweils zweckmäßige Bremskraftverteilung ermittelt, abgespeichert und im Zuge nachfolgender Bremsanforderungen jeweils aktuellen Erfordernissen angepaßt, d.h. korrigiert.

Vorteilhafte Weiterbildungen sind nach den rückbezogenen Ansprüchen 2 bis 11 gegeben.

Insgesamt erlaubt das erfindungsgemäße Verfahren, vorhandene Raddrehgeschwindigkeitsgeber einer Kombination aus Zugfahrzeug und Anhängefahrzeug zu nutzen, um einerseits einen ausgeglichenen Verschleiß, andererseits eine Optimalausnutzung der Gesamtbremsleistungskapazität von Zugfahrzeug und Anhängefahrzeug zu ermöglichen und darüberhinaus auch die Zahl kritischer bzw. hochbelasteter Signalgeber und ihrer notwendigen Verbindungswege zu einem elektronischen Steuergerät im Zugfahrzeug zu minimieren. Das Verfahren bewirkt insoweit auch eine deutliche Zuverlässigkeitssteigerung einer entsprechenden Bremsanlage.

Das erfindungsgemäße Verfahren ist in der Zeichnung veranschaulicht und in der nachfolgenden Beschreibung erläutert. Es zeigen:

Figur 1 fahrwerkseitige Bestandteile eines beispielhaften, zur Durchführung des Verfahrens geeigneten elektronischen Druckluft-Brems-systems;

Figur 2 ein Flußdiagramm des erfindungsgemäßen Verfahrens.

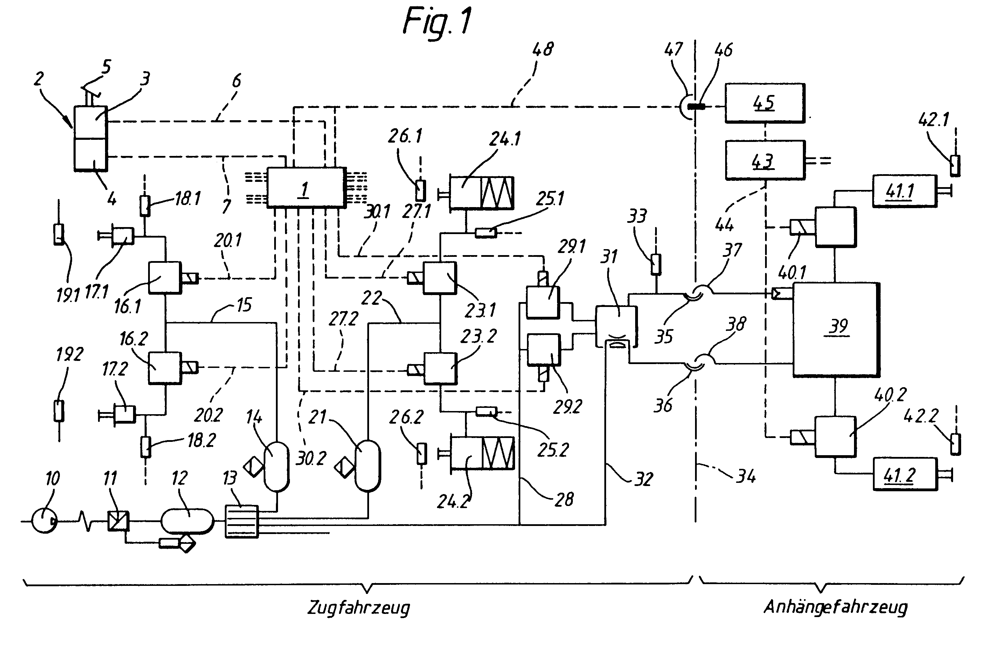

Zum besseren Verständnis des Verfahrens ist seiner Beschreibung eine kurze Erläuterung einer zur Durchführung des Verfahrens geeigneten Bremsanlage gemäß **Figur 1** vorangestellt.

Von einem Luftkompressor 10 werden über einen Druckregler 11, einen Vorratsbehälter 12 und ein Mehrwege-Sicherheitsventil 13 Untervorratsbehälter 14 und 21 sowie über Leitungen 28 und 32 zwei impulsgesteuerte Regelventile 29.1 und 29.2 und ein Anhängersteuerventil 31 mit Druckmittel versorgt; die Untervorratsbehälter 14 und 21 sind je einem Vorderachs- bzw. Hinterachsbremskreis des Zugfahrzeugs zugeordnet. Von besagten Untervorratsbehältern werden über Leitungen 15 bzw. 22 Vorderachs- und Hinterachsbremsventile 16.1 und 16.2 bzw. 23.1 und 23.2 mit Vorratsdruck beaufschlagt. Besagte Ventile sind durch Signalleitungen 20.1 und 20.2 bzw. 27.2 und 27.2 von einem zentralen elektronischen Bremssteuergerät 1 ansteuerbar. Von den vorgenannten Ventilen erreicht das Druckmittel Vorderachs- und Hinterachsbremszylinder 17.1 und 17.2 bzw. 23.1 und 23.2 sowie diesen zugeordnete Bremsdrucksensoren 18.1 und 18.2 bzw. 25.1 und 25.2., die ihrerseits, wie auch entsprechende Raddrehgeschwindigkeitsensoren 19.1 und 19.2 bzw. 26.1 und 26.2, entsprechende Signale an besagtes elektronisches Bremssteuergerät 1 abgeben.

Nach Maßgabe des von diesen Signalen und einer Sollverzögerungsanforderung vom Betriebsbremsgeber 2 - letzterer durch das Bremspedal 5 betätigt und hier beispielhaft zwe; über Leitungen 6 und 7 mit dem Steuergerät 1 verbundene Gebersektionen 3 und 4 umfassend - gespeisten Bremsprogramms im Steuergerät 1 wird der einzelnen Rädern zugemessene Radbremsdruck dosiert, und zwar vorzugsweise so, daß ein Blockieren der Räder des Zugfahrzeugs verhindert wird (ABS-Funktion) und eine möglichst gleichmäßige Kraftschlußausnutzung an den Achsen entsprechend dem aktuellen Beladungszustand erreicht wird.

In entsprechender Weise sind die schon oben erwähnten Regelventile 29.1 und 29.2 für ein Anhängefahrzeug über Leitungen 30.1 und 30.2 vom Steuergerät 1 ansteuerbar. Die Ausgänge dieser beiden Ventile sind an ein Anhängersteuerventil 31 geführt. Das Anhängersteuerventil 31 beaufschlagt einen Brems- und Vorratskupplungskopf 35 bzw. 36 mit Druckmittel, wobei der Druck am Bremskupplungskopf 35 von einem mit dem Steuergerät 1 verbundenen Drucksensor 33 erfaßt wird.

Rechts der Linie 34 sind beispielhaft Teile der Bremsanlage des Anhängefahrzeugs dargestellt. Brems- und Vorratskupplungsstücke 37 bzw. 38 stehen mit einem Anhängerbremsventil 39 in Verbindung, das seinerseits unter Zwischenschaltung von ABS-Impulsregelventilen 40.1 und 40.2 auf die Bremszylinder 41.1 und 41.2 an wenigstens einer Achse des Anhängefahrzeugs wirkt. Über eine Leitung 44 steuert ein Anhänger-ABS-Steuergerät 43 besagte ABS-Impulsregelventile 40.1 und 40.2 elektrisch an.

Wenigstens zwei zugeordnete Raddrehgeschwindigkeits-sensoren 42.1 und 42.2 übertragen entsprechende Drehgeschwindigkeitssignale hier beispielsweise an ein ABS-Steuergerät 43, womit der ABS-Bremsregelkreis für das Anhängefahrzeug geschlossen ist. Das Anhänger-ABS-Steuergerät 43 steht beispielsweise mit einem Schnittstellengerät 45, insbesondere mit einem CAN-Controller 45, in Verbindung, welcher (ggfs. bereits speziell aufbereitete) Raddrehgeschwindigkeitssignale an einem anhängerseitigen Schnittstellenteil 46 bereitstellt. Über ein zugfahrzeugseitiges Schnittstellenteil 47 und eine Signalleitung 48 können besagte Raddrehgeschwindigkeitssignale des Anhängefahrzeugs an das zentrale elektronische Bremssteuergerät 1 des Zugfahrzeugs übermittelt werden. Druckmittelspeicher des Anhängefahrzeugs sind hier der Einfachheit halber weggelassen.

Zwar ist für die Durchführbarkeit des erfindungsgemäßen Verfahrens eine derartige Wirkstruktur einer Druckmittelbremsanlage im Anhängefahrzeug besonders vorteilhaft, weil sie im Hinblick auf die Mittelung, Durchmesserbereinigung, Filterung etc. von Raddrehgeschwindigkeiten schon eine gewisse Datenvorverarbeitung im Anhängefahrzeug erlaubt, was zu einer einfachen Ausbildung der Schnittstelle 46, 47 führt. Sie ist aber nicht grundsätzliche Voraussetzung zur Durchführung des Verfahrens, da dieses prinzipiell nur Rad-

drehgeschwindigkeitssensoren an gebremsten Rädern des Lastzuges und eine Möglichkeit wie auch immer zur Übermittlung entsprechender Signale an ein elektronisches Bremssteuergerät im Bremsanforderungen und den Versorgungsdruck bereitstellenden Zugfahrzeug voraussetzt. Das Anhängefahrzeug muß also nicht zwingend über eine eigene elektrische Stromversorgung oder gar ein elektrisches Bordnetz und elektrisch zu versorgende Erfassungs- und Signalverarbeitungsmittel verfügen. Allerdings ist das Verfahren besonders vorteilhaft in einem elektronischen Steuergerät 1 mit ABS-Funktion für das Zugfahrzeug durchführbar; die impulsgesteuerten Regelventile 29.1 und 29.2 für das Anhängefahrzeug wirken dabei im Sinne der Steuerung und Versorgung einer weiteren, zu bremsenden "Achse".

Im Rahmen der Erfindung wäre es also auch denkbar, die Raddrehgeschwindigkeiten des Anhängefahrzeugs z.B. induktiv oder optisch zu erfassen und/oder an das Zugfahrzeug zu übertragen und bis zu dem zentralen elektronischen Bremssteuergerät 1 - entsprechend der Anzahl gebremster und drehzahlerfaßter Räder des Annängefahrzeugs - alle erforderlichen Signalwege und Erfassungskanäle für die auszuwertenden, individuellen Raddrehzahlen des Anhängefahrzeugs vorzusehen. Analoges gilt selbstverständlich auch für die Raddrehzahlen der Zugwagenachsen.

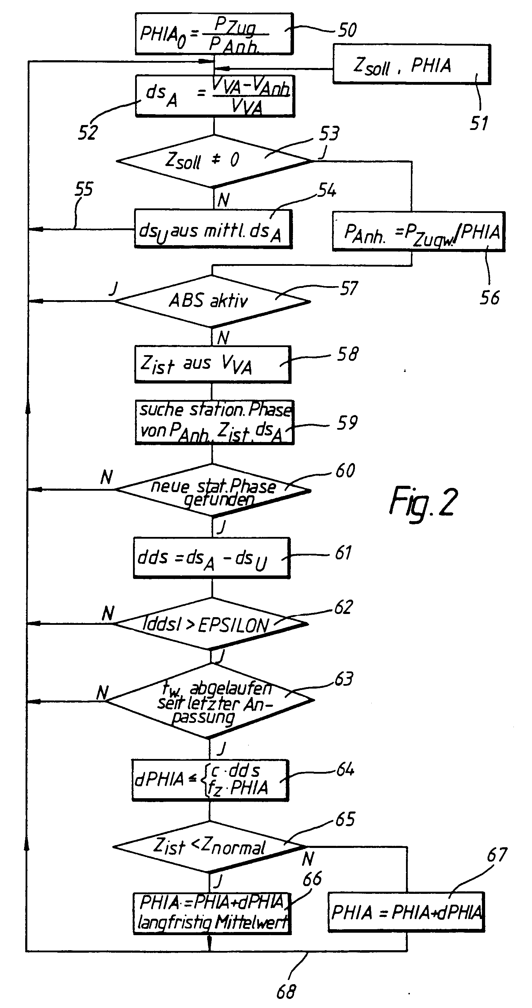

Auf entsprechenden Bremsanlagen ist das nunmehr anhand des Flußdiagrammes gemäß **Figur 2** beschriebene Bremsverfahren durchführbar.

Zu Beginn einer Fahrt wird im **Schritt 50** für die Bremsdruckrelation

$$PHIA = p_{Zugfahrzeug}/p_{Anhängefahrzeug}$$

ein fest gespeicherter Festwert $PHIA_0$ geladen, der als Mittelwert beispielsweise für eine ganze Fahrzeugpalette einmalig im voraus ermittelt wurde und bei jeder Initialisierung zunächst gültig ist. Unter $p_{Zugfahrzeug}$ ist dabei vorzugsweise ein gewichteter Mittelwert der Bremsdrücke an Vorder- und Hinterache(n) des Zugfahrzeugs im Sinne eines Bezugsbremsdrucks des Zugfahrzeugs zu verstehen. Nach einmal erfolgter Initialisierung des Bremsprogramms wird dieser Ausgangswert $PHIA_0$ im Laufe des sich daran anschließenden Bremsbetriebes während der laufenden Fahrt gemäß dem folgenden Verfahrensschema optimiert bzw. aktualisiert.

Während der gesamten Fahrt wird in einem **Schritt 52** in programmzyklischem Takt jeweils nach 10....50 ms - und insoweit praktisch kontinuierlich - die auf die mittlere Drehgeschwindigkeit $V_{VA}$ bremsbarer, aber nicht angetriebener Zugwagen-(Vorder)Räder bezogene, d.h. relative Differenz $ds_A$ zwischen der mittleren Raddrehgeschwindigkeit $V_{VA}$ der nicht angetriebenen Räder des Zugwagens, insbesondere also dessen Vorderräder, und der mittleren Drehgeschwindigkeit $V_{Anh}$ bremsbarer Räder des Anhängefahrzeugs berechnet:

$$ds_A = (V_{VA} - V_{Anh})/V_{VA}.$$

Solange Abbremsungen ohne Wirksamkeit eines ABS geschehen, steht dabei der mittlere Wert $V_{VA}$ mit ausreichender Genauigkeit für die tatsächliche Fahrgeschwindigkeit; aus ihr wird auch weiter unten durch Differentiation bzw. Differenzbildung über eine feste Zeitspanne die jeweilige Fahrzeugverzögerung $Z_{ist}$ berechnet.

Im **Schritt 53** wird geprüft, ob eine ungebremste Fahrt vorliegt, d.h. ob der vom Fahrer über das Bremspedal 5 vorgegebene Abbremsungswunsch $Z_{soll}$ ungleich oder gleich Null ist.

In letzterem Falle spiegelt $ds_A$ nur unterschiedliche Reifendurchmesser wider; im **Schritt 54** wird deshalb zur Signalglättung aus solchen "ungebremsten" relativen Drehgeschwindigkeitsdifferenzen $ds_A$ ein gleitender Mittelwert über einen gewissen Schleppzeitraum, in praxi etwa 0,1... 1,0 Sekunden, gebildet und kontinuierlich fortgeschrieben. Auch eine über längere Zeitabschnitte bis z.B. 30 Minuten durchgeführte Mittelwertbildung ist geeignet. Der auf diese Weise gewonnene Mittelwert solch "ungebremster $ds_A$" wird bei fehlender Bremsbetätigung, d.h. bei $Z_{soll}$ gleich Null, über den Pfad **55** fortlaufend aktualisiert, bei Bremsbetätigung hingegen für die Dauer der Bremsung als Offset-Wert $ds_u$ festgehalten.

Weicht hingegen im Schritt 53 $Z_{soll}$ von Null ab, liegt der Bremsfall vor und es wird zunächst im **Schritt 56** mittels des Koeffizienten PHIA der Bremsmitteldruck für das Anhängefahrzeug ermittelt und eingestellt:

$$p_{Anh} = PHIA^{-1} * p_{Zug.}.$$

Im Rahmen dieses Schrittes kann auch noch routinemäßig überprüft werden, ob der sich daraus für das Anhängefahrzeug ergebende Bremsdruck $p_{Anh}$ innerhalb jener eingangs erwähnten, vorgeschriebenen Abbremsungsbänder liegt, widrigenfalls $p_{Anh}$ auf den betreffenden Bandgrenzwert begrenzt werden kann.

Anschließend wird im **Schritt 57** geprüft, ob die laufende Bremsung im ABS-aktiven Bereich abläuft oder nicht. Ist ersteres der Fall, findet kein Eingriff in Druckverteilung PHIA zwischen Zug- und Anhängefahrzeug statt und es erfolgt ein Rücksprung zum Schleifenanfang.

Ist dies nicht der Fall, wird im **Schritt 58** durch Differentiation bzw. Differenzbildung über eine feste Zeitspanne aus der Drehgeschwindigkeit $V_{VA}$ der nicht angetriebenen (Vorder-)Räder des Zugfahr-

zeugs die jeweilige Fahrzeugverzögerung $Z_{ist}$ berechnet.

Im nachfolgenden **Schritt 59** werden die Größen $p_{Anh}$, $Z_{ist}$ und $ds_A$ dahingehend untersucht, ob sie eine Bedingung für das Vorliegen einer stationären Phase erfüllen.

Im **Schritt 60** wird geprüft, ob eine solche stationäre Phase gefunden wurde. Ist dies nicht der Fall, findet kein Eingriff in Druckverteilung PHIA zwischen Zug- und Anhängefahrzeug statt und es erfolgt ein Rücksprung zum Schleifenanfang.

Ist dies jedoch der Fall, wird im **Schritt 61** eine augenblickliche Veränderung der Größe $ds_A$, d.h. das Auftreten einer Differenz dds infolge der Bremskräfte als Maß für eine falsche Bremskraftverteilung gewertet:
Ein positiver Wert von dds, d.h. eine größere relative Drehgeschwindigkeit der nicht angetriebenen (Vorder-) Räder des Zugfahrzeugs bedeutet insoweit, daß die Räder des Anhängers im Mittel mit höherem Bremsschlupf laufen, insoweit also zu stark gebremst werden.

In einem solchen Falle ist also die Bremsdruckverteilung PHIA in Richtung eines erhöhten Bremsanteils des Zugwagens zu korrigieren.

Bevor jedoch eine solche Korrektur ausgeführt wird, erfolgt im **Schritt 62** noch eine Abfrage, ob der Betrag von dds größer ist als ein vorgegebener Schwellwert EPSILON. Ist dies nicht der Fall, unterbleibt eine Anpassung der Bremsdruckverteilung PHIA und es erfolgt ein Rücksprung zum Schleifenanfang. Die Größe von EPSILON ist dabei entsprechend den zu erwartenden Streuungen der Geschwindigkeitsdifferenzen gewählt, also z.B. EPSILON = 0,03...0,15 % der Fahrgeschwindigkeit.

Ist der Betrag von dds größer EPSILON, kann im nächsten **Schritt 63** eine Abfrage stattfinden dahingehend, ob seit der letzten Anpassung von PHIA eine fixe Mindestwartezeit $t_w$ abgelaufen ist, beispielsweise $t_w$ = 0,2...0,5 Sekunden. Ist letzteres nicht der Fall. erfolgt keine Anpassung von PHIA und stattdessen ein Rücksprung zum Schleifenanfang.

Ist dies jedoch der Fall, wird im **Schritt 64** eine aktuelle Korrekturgröße dPHIA der Bremsdruckverteilung PHIA berechnet, und zwar als

$$dPHIA = c * dds, \text{ mit beispielsweise } c = 0{,}1.$$

Dabei wird außerdem abgeprüft, ob der so erhaltene Wert kleiner oder höchstens gleich dem Produkt aus der zuvor wirksamen Bremsdruckverteilung PHIA und einem Grenzkoeffizienten $f_z$ mit z.B. $f_z$ = 0,05...0,1 ist. Ist dies nicht der Fall, wird die Korrekturgröße dPHIA auf den durch das Produkt ($f_z$ * PHIA) vorgegebenen Maximalwert begrenzt; PHIA soll sich also pro Korrektur nur um z.B. 5...10% ändern.

Schließlich kann im **Schritt 65** noch abgefragt werden, ob die laufende Bremsung im Bereich normaler oder niedriger Abbremsungen stattfindet, d.h., ob die laufende Bremsverzögerung $Z_{ist}$ kleiner ist als ein vorgegebener Schwellwert $Z_{normal}$ von beispielsweise 0,25g.

Im letzteren Falle der "schwachen" Bremsung wird im **Schritt 66** aus der korrigierten Bremsdruckverteilung PHIA ein Mittelwert "langfristig" gebildet und für weitere Bremsungen der laufenden Fahrt als Ausgangswert $PHIA_0$ verwendet. "Langfristig" bedeutet hierbei zunächst eine Mittelwertbildung über die (beispielsweise drei) letzten PHIA-Werte einer Bremsung oder- zum Ausgleich streuender Störeinflüsse - eine gleitende Mittelwertbildung über die letzten z.B. 30 Minuten oder über die letzten z.B. 20 bis 30 Bremsungen einer Fahrt.

Ist das Abbremsungsniveau $Z_{ist}$ größer als hier beispielsweise 0,25g, wird die langfristige Mittelwertbildung unterdrückt und es wird stattdessen im **Schritt 67** die Korrektur der Bremsdruckverteilung PHIA unmittelbar nur für die laufende Bremsung vorgenommen; über den Pfad **68** wird dann der Schleifenanfang wieder erreicht.

Vorteilhafterweise kann bei der Mittelwertbildung für PHIA noch eine Klassierung der $PHIA_0$-Werte nach der jeweiligen Abbremsungshöhe $Z_{ist}$ erfolgen, also z.B. in drei Klassen, etwa [kleiner 0,1g], [0,1...0,18g], [0,18g...0,25g], mit g = 9,81 $m/s^2$. Entsprechend erfolgt dann die Abspeicherung in Klassen, welche entsprechenden Bandbreiten der Bremsanforderung ($Z_{soll}$) zugeordnet werden.

Bei dem der Abfrage der aktuellen Bremsanforderung $Z_{soll}$ in Schritt 53 vorausgehenden **Vorgabeschritt 51** können dann solche in Abhängigkeit von $Z_{ist}$ klassierten Werte PHIA analog dem **Schritt 50** gemäß dem am Bremspedal 5 aktuell eingegebenen Abbremsungswunsch $Z_{soll}$ ausgewählt werden. Auf diese Weise wird eine besonders feinstufige Anpassung erreicht.

Fehlanpassungen infolge von Systemtotzeiten oder von Signalstreuungen werden verfahrensgemäß dadurch wirkungsvoll unterdrückt, daß die Anpassung der Bremsdruckverteilung zwischen Zugfahrzeug und Anhängefahrzeug nur in zuvor als stationär erkannten Bremsphasen geschieht. In Verbindung damit wird die Größe von dPHIA nach oben so begrenzt und die Wartezeit $t_w$ zwischen zwei aufeinanderfolgenden Anpassungen von PHIA so gewählt, daß es nicht zu Abbremsungsstößen und/oder zu Regelschwingungen und insoweit nicht zu für den Fahrer störenden Bremsabläufen kommt.

Es ist offensichtlich, daß das Verfahren bei Ausrüstung des Anhängefahrzeugs mit einem elektronisch wirkenden ABS-System 40.1, 40.2, 41.1, 41.2, 42.1, 42.2, 43, gemäß Figur 1 eine besonders einfache und robuste Signalschnittstelle 46, 47 erlaubt, indem dann verfahrensgemäße Mittelwertbildungen und Drehzahlnormierungen bzw. -bereinigungen bereits im Anhängefahrzeug erfolgen können und es dadurch möglich wird, den Signalpfad 48 auf im wesentlichen eine Signalader in Richtung Zugfahrzeug zu reduzieren.

Dadurch wird nicht nur die störsicherheit und Verfügbarkeit der zugfahrzeugseitigen Installation erhöht. Weil in einem solchen Falle im Anhängefahrzeug ohnehin Raddrehgeschwindigkeitssensoren vorhanden sind, wird aufgrund des Wegfalles eines Koppelkraftsensors und entsprechender Installationsmittel auch eine Einsparung von Kosten gegenüber ABS-Zugfahrzeug-Bremsanlagen mit Steuer- und Versorgungsfunktion für Anhängefahrzeuge erzielt, vor allem dann, wenn - wie in Figur 1 beispielhaft veranschaulicht - auf eine redundante pneumatische Ansteuerung des Anhängersteuerventils 31 verzichtet wird.

Weiter verstärkt werden die letztgenannten Vorteile, wenn die Rückübertragung eines für die Raddrehgeschwindigkeiten mehrerer Räder des Anhängefahrzeugs spezifischen Signals über ein besonderes Schnittstellengerät in der Art eines Kommunikations-Controllers, etwa eines CAN-Controllers, im Anhängefahrzeug erfolgt, da über ein solches Gerät auch Betriebszustandsinformationen und Diagnosedaten von den einzelnen Elementen einer entsprechenden ABS-Druckmittelbremsanlage im Anhängefahrzeug an das Zugfahrzeug übermittelt werden können. Eine solche Übermittlung kann auf sehr robuste Weise über denselben Signalpfad zum zentralen elektronischen Steuergerät 1 im Zugfahrzeug erfolgen. Dies hat zur Folge, daß eine ungestörte Empfangsmöglichkeit von Diagnosedaten im Zugfahrzeug zugleich die Fehlerfreiheit des Signalweges für Raddrehgeschwindigkeitssignale vom Anhängefahrzeug bedeutet und somit auf eine besondere Überwachung eines besonderen Signalpfades für ein Drehgeschwindigkeitssignal vom Anhängefahrzeug verzichtet werden kann.

**Patentansprüche**

1. Verfahren zur Bremsdruckregelung für ein Anhängefahrzeug, welches mit einem Zugfahrzeug mit von einem elektronischen Steuergerät gesteuerter Druckmittelbremsanlage verbunden ist und vom Zugfahrzeug mit Druckmittel versorgt wird, wobei zur Verteilung der Bremsarbeit auf Zugfahrzeug und Anhängefahrzeug eine adaptive Beeinflussung des an das Anhängefahrzeug abgegebenen Bremsdruckes erfolgt,

   **gekennzeichnet** durch folgende Schritte:
   a. von nicht angetriebenen Rädern des Zugfahrzeugs und des Anhängefahrzeugs werden Raddrehgeschwindigkeitssignale gewonnen;

   b. wenigstens ein für wenigstens die Raddrehgeschwindigkeiten einer Achse des Anhängefahrzeugs repräsentatives Signal wird an das Zugfahrzeug übertragen;

   c. das wenigstens eine für wenigstens die Raddrehgeschwindigkeiten einer Achse des Anhängefahrzeugs repräsentative Signal wird zusammen mit Raddrehgeschwindigkeitssignalen vom Zugfahrzeug dort in besagtem Steuergerät zyklisch verarbeitet wie folgt:

   d. Vom Beginn einer Fahrt an wird in ungebremstem Zustand ein gleitender Mittelwert ($ds_U$) der relativen Differenz ($ds_A$) zwischen mittleren Raddrehgeschwindigkeiten nichtangetriebener Räder des Zugfahrzeugs und des Anhängefahrzeugs kontinuierlich gebildet und fortgeschrieben;

   e. im Falle einer Bremsung wird der Bremsdruck für das Anhängefahrzeug ($p_{Anh}$) - ausgehend von einem zugfahrzeugtypisch festen Startwert ($PHIA_0$) für die Bremsdruckrelation zwischen Zugfahrzeug und Anhängefahrzeug - als Produkt aus einem Bezugsbremsdruck des Zugfahrzeugs ($p_{Zug}$) und dem Druckrelationskoeffizienten ($PHIA$) berechnet und entsprechend bereitgestellt;

   f. nach Beginn der Bremsung wird aus der Drehgeschwindigkeit ($v_{VA}$) nicht angetriebener Zugfahrzeugräder die tatsächliche Abbremsung ($Z_{ist}$) berechnet;

   g. es wird geprüft, ob die ABS-Funktion aktiv ist mit der Maßgabe, daß der Schritt (h) und nachfolgende Schritte nur ausgeführt werden, wenn die ABS-Funktion inaktiv ist;

   h. während der laufenden Bremsung wird durch Analyse des Anhängerbremsdruckes ($p_{Anh}$), der relativen Differenz ($ds_A$) zwischen mittleren Raddrehgeschwindigkeiten nichtangetriebener Räder des Zugfahrzeugs und des Anhängefahrzeugs sowie der tatsächlichen Abbremsung ($Z_{ist}$) geprüft (59), ob eine stationäre Bremsphase vorliegt;

   i. es wird geprüft (61, 62), ob die Differenz (dds) zwischen der momentanen relativen Differenz (dsA) zwischen mittleren Raddrehgeschwindigkeiten nichtangetriebener Räder des Zugfahrzeugs und des Anhängefahrzeugs und dem ungebremst fortgeschriebenen gleitenden Mittelwert davon ($ds_U$) betragsmäßig größer ist als ein Schwellwert EPSILON;

   k. bei Vorliegen einer stationären Bremsphase (60) und Überschreitung von EPSILON (62) wird ausgehend von dem Startwert ($PHIA_0$) für die Bremsdruckrelation

eine Änderung (dPHIA) der Bremsdruckrelation zwischen Zugfahrzeug und Anhängefahrzeug berechnet, die proportional zu besagter aktuellen Differenz (dds) zwischen der momentanen relativen Differenz ($ds_A$) zwischen mittleren Raddrehgeschwindigkeiten nichtangetriebener Räder des Zugfahrzeugs und des Anhängefahrzeugs und dem ungebremst fortgeschriebenen gleitenden Mittelwert davon ($ds_U$) ist;

l. die Änderung (dPHIA) wird zum bisherigen Wert ($PHIA_0$, PHIA) addiert;

m. das so adaptierte Ergebnis (PHIA) wird als neuer Vorsteuerungswert für die Bremsdruckrelation zwischen Zugfahrzeug und Anhängefahrzeug abgespeichert.

2. Verfahren nach Anspruch 1,
   **dadurch gekennzeichnet**,
   - daß besagter Bezugsbremsdruck ($p_{Zug}$) des Zugfahrzeugs ein gewichteter zwischenachsiger Mittelwert ist.

3. Verfahren nach Anspruch 1,
   **dadurch gekennzeichnet**,
   - daß die Verfahrensschritte d. bis m. im Rahmen einer erweiterten ABS-Funktion eines elektronischen ABS-Steuergeätes für das Zugfahrzeug abgewickelt werden.

4. Verfahren nach Anspruch 1,
   **dadurch gekennzeichnet**,
   - daß vor dem Schritt k. folgender zusätzliche Schritt vorgesehen ist:
   n. es wird geprüft, ob seit der letzten Adaption des Bremsdruckrelationskoeffizienten (PHIA) eine Wartezeit ($t_W$) abgelaufen ist, mit der Maßgabe, daß der Schritt (k) und die nachfolgenden Schritte nur ausgeführt werden, wenn die Wartezeit ($t_W$) abgelaufen ist.

5. Verfahren nach Anspruch 1,
   **dadurch gekennzeichnet**,
   - daß vor dem Schritt m. folgender zusätzliche Schritt vorgesehen ist:
   o. es wird geprüft, ob die tatsächliche Abbremsung ($Z_{ist}$) kleiner ist als ein vorgegebener Grenzwert ($Z_{normal}$) mit der Maßgabe, daß bei Unterschreiten besagten Grenzwertes ($Z_{normal}$) als Adaptionswert jeweils ein längerfristiger Mittelwert (PHIA) aus mehreren aufeinanderfolgenden Ergebnissen des Schrittes l. gebildet wird.

6. Verfahren nach Anspruch 1,
   **dadurch gekennzeichnet**,

   - daß im Schritt k. die Änderung (dPHIA) jedenfalls auf einen Wert begrenzt wird, der dem Produkt aus der bisherigen Bremsdruckrelation (PHIA) und einem Grenzkoeffizienten ($f_Z$) entspricht.

7. Verfahren nach Anspruch 1,
   **dadurch gekennzeichnet**,
   - daß vor dem Schritt k. folgender zusätzliche Schritt vorgesehen ist:
   p. die Ergebnisse für den Bremsdruckrelationskoeffizienten (PHIA) werden in Abhängigkeit von der jeweils erreichten Abbremsung ($Z_{ist}$) vor der Speicherung in verschiedene Bereiche klassiert und nach Beginn einer Bremsung in Abhängigkeit von der Höhe der laufenden Bremsanforderung ($Z_{soll}$) jeweils entsprechend ausgewählt und als aktuelle Ausgangswerte für die Adaption der Bremsdruckrelation verwendet.

8. Verfahren nach Anspruch 1,
   **dadurch gekennzeichnet**,
   - daß im Verlaufe des Schrittes e. ein Vergleich des sich für das Anhängefahrzeug ergebenden Bremsdruckes ($p_{Anh}$) erfolgt und dann, wenn das rechnerische Ergebnis außerhalb einer gewissen fest vorgegebenen Bandbreite liegt, der betreffende Bandgrenzwert als Maßvorgabe für den aktuellen Bremsdruck ($p_{Anh}$) für das Anhängefahrzeug verwendet wird.

9. Verfahren nach Anspruch 1,
   **dadurch gekennzeichnet**,
   - daß es in Verbindung mit einem ABS-Bremssystem im Anhängefahrzeug durchgeführt wird.

10. Verfahren nach Anspruch 9,
    **dadurch gekennzeichnet**,
    - daß das ABS-Bremssystem im Anhängefahrzeug elektronisch wirkt und daß zur Durchführung des Verfahrens mehrere Raddrehgeschwindigkeitssignale vom Anhängefahrzeug in einem entsprechenden ABS-Steuergerät (43) im Anhänger aufbereitet werden und daß die Übertragung des wenigstens einen für wenigstens die Raddrehgeschwindigkeiten einer Achse des Anhängefahrzeugs repräsentativen Signals an das Zugfahrzeug über ein besonderes Schnittstellengerät (45) erfolgt.

11. Verfahren nach Anspruch 10,
    **dadurch gekennzeichnet**,

- daß das Schnittstellengerät (45) einen CAN-Controller umfaßt und die Übertragung des wenigstens einen für wenigstens die Raddrehgeschwindigkeiten einer Achse des Anhängefahrzeugs repräsentativen Signals an das Zugfahrzeug über denselben CAN-Signalpfad erfolgt, über den der CAN-Controller auch Diagnosedaten über den Zustand der Elemente der Bremsanlage im Anhängefahrzeug an das Zugfahrzeug zu übertragen erlaubt.

**Claims**

1. Brake pressure regulation method for a trailer vehicle which is connected to a tractor vehicle having a pressure-medium brake system controlled by an electronic control unit and is supplied by the tractor vehicle with pressure medium, adaptive influencing of the brake pressure emitted to the trailer vehicle being performed in order to distribute the braking work between the tractor vehicle and the trailer vehicle,
characterised by the following steps:

    a. wheel speed signals are obtained from non-driven wheels of the tractor vehicle and of the trailer vehicle;

    b. at least one signal representative of at least the wheel speeds of one axle of the trailer vehicle is transmitted to the tractor vehicle;

    c. together with wheel speed signals from the tractor vehicle, the signal, of which there is at least one, representative of at least the wheel speeds of one axle of the trailer vehicle is processed cyclically in the tractor vehicle in the said control unit as follows:

    d. a sliding average ($ds_U$) of the relative difference ($ds_A$) between the average wheel speeds of non-driven wheels of the tractor vehicle and of the trailer vehicle is continuously formed and updated in the unbraked condition from the beginning of a journey;

    e. in the case of a braking operation, the brake pressure for the trailer vehicle ($p_{trail}$) is - starting from a fixed starting value ($PHIA_0$), typical of the tractor vehicle, for the brake pressure relation between the tractor vehicle and the trailer vehicle - calculated as the product of a reference brake pressure of the tractor vehicle ($p_{tractor}$) and the pressure relation coefficient (PHIA) and correspondingly made available;

    f. after the beginning of the braking operation, the actual retardation ($Z_{actual}$) is calculated from the speed ($v_{VA}$) of non-driven wheels of the tractor vehicle;

    g. a check is made to determine whether the ABS function is active, with the proviso that step (h) and following steps are only carried out if the ABS function is inactive.

    h. as braking continues, a check (59) is made, by analysing the trailer brake pressure ($p_{trail}$), the relative difference ($ds_A$) between average wheel speeds of non-driven wheels of the tractor vehicle and of the trailer vehicle and the actual retardation ($Z_{actual}$), to determine whether a steady-state braking phase is present;

    i. a check (61, 62) is made to determine whether the difference (dds) between the instantaneous relative difference ($ds_A$) between average wheel speeds of non-driven wheels of the tractor vehicle and of the trailer vehicle and the unbraked updated sliding average thereof ($ds_U$) is larger in its absolute value than a threshold value EPSILON;

    k. if a steady-state braking phase (60) is present and EPSILON (62) is exceeded, then, starting from the starting value ($PHIA_0$) for the brake pressure relation, a change (dPHIA) in the brake pressure relation between the tractor vehicle and the trailer vehicle is calculated, this being proportional to the said current difference (dds) between the instantaneous relative difference ($ds_A$) between average wheel speeds of non-driven wheels of the tractor vehicle and of the trailer vehicle and the unbraked updated sliding average thereof ($ds_U$);

    l. the change (dPHIA) is added to the previous value ($PHIA_0$, PHIA);

    m. the result (PHIA) adapted in this way is stored as the new pilot control value for the brake pressure relation between the tractor vehicle and the trailer vehicle.

2. Method according to Claim 1, characterised in that

    - the said reference brake pressure ($p_{tractor}$) of the tractor vehicle is a weighted inter-axle average.

3. Method according to Claim 1, characterised in that

    - method steps d. to m. are performed within the context of an expanded ABS function of an electronic ABS control unit for the tractor vehicle.

4. Method according to Claim 1, characterised in that

- the following additional step is provided before step k.:

n. a check is made to determine whether a waiting time ($t_w$) has expired since the last adaptation of the brake pressure relation coefficient (PHIA), with the proviso that step (k) and the following steps are only carried out if the waiting time ($t_w$) has expired.

5. Method according to Claim 1, characterised in that

- the following additional step is provided before step m.:

o. A check is made to determine whether the actual retardation ($Z_{actual}$) is smaller than a predetermined limiting value ($Z_{normal}$), with the proviso that if the said limiting value ($Z_{normal}$) is undershot a longer-term average (PHIA) of a plurality of successive results of step l. is in each case formed as the adaptation value.

6. Method according to Claim 1, characterised in that

- the change (dPHIA) in step k. is in each case limited to a value which corresponds to the product of the previous brake pressure relation (PHIA) and a limiting coefficient ($f_z$).

7. Method according to Claim 1, characterised in that

- the following additional step is provided before step k.:

p. the results for the brake pressure relation coefficient (PHIA) are classified into different ranges prior to storage as a function of the respectively achieved retardation ($Z_{actual}$) and, after the beginning of a braking operation, are in each case chosen accordingly as a function of the level of the current braking demand ($Z_{set}$) and used as current output values for the adaptation of the brake pressure relation.

8. Method according to Claim 1, characterised in that

- a comparison of the brake pressure ($p_{trail}$) obtained for the trailer vehicle is carried out in the course of step e. and if the calculated result is outside a certain fixed band width the relevant band limiting value is used as the determinant for the current brake pressure ($p_{trail}$) for the trailer vehicle.

9. Method according to Claim 1, characterised in that

- it is carried out in conjunction with an anti-lock brake system in the trailer vehicle.

10. Method according to Claim 9, characterised in that

- the anti-lock brake system in the trailer vehicle has an electronic action and in that, to carry out the method, a plurality of wheel speed signals are prepared by the trailer vehicle in a corresponding ABS control unit (43) in the trailer and in that the signal, of which there is at least one, representative of at least the wheel speeds of one axle of the trailer vehicle is transmitted to the tractor vehicle via a special interface device (45).

11. Method according to Claim 10, characterised in that

- the interface device (45) comprises a CAN controller and the signal, of which there is at least one, representative of at least the wheel speeds of one axle of the trailer vehicle is transmitted to the tractor vehicle via the same CAN signal path via which the CAN controller allows diagnostic data on the condition of the elements of the brake system in the trailer vehicle to be transmitted to the tractor vehicle.

**Revendications**

1. Procédé de régulation de la pression de freinage d'une remorque, qui est reliée à un véhicule tracteur comportant une installation de freinage à fluide sous pression, commandée par un appareil de commande électronique, et est alimentée en fluide sous pression par le véhicule tracteur, et selon lequel pour la répartition du travail de freinage entre le véhicule tracteur et la remorque, on applique une influence adaptative à la pression de freinage délivrée à la remorque,

caractérisé par les étapes suivantes :

a. des signaux de vitesse de roues sont obtenus à partir de roues non motrices du véhicule tracteur et de la remorque;

b. au moins un signal représentatif au moins des vitesses de rotation de roues d'un essieu de la remorque est transmis au véhicule tracteur;

c. le au moins un signal représentatif au moins des vitesses de roues d'un essieu de la remorque est traité cycliquement, conjointement avec les signaux de vitesse de roues du véhicule tracteur, dans ce dernier, à l'intérieur dudit appareil de commande, de la manière suivante :

d. à partir du début du déplacement, à l'état non freiné, une valeur moyenne courante ($ds_U$) de la différence relative ($ds_A$) entre les vitesses moyennes de roues non motrices du véhicule tracteur et de la remorque est formée et actualisée en permanence;

e. dans le cas d'un freinage, la pression de freinage pour la remorque ($P_{Anh}$) est calculée - à partir d'une valeur de départ ($PHIA_0$), fixe pour le type de véhicule, pour la relation de la pression de freinage entre le véhicule tracteur et la remorque - en tant que produit d'une pression de freinage de référence du véhicule tracteur ($P_{Zug}$) par le coefficient de relation de pression (PHIA), et est délivrée de façon correspondante;

f. après le début du freinage, le freinage effectif ($Z_{ist}$) est calculé à partir de la vitesse de rotation ($V_{VA}$) de roues non motrices du véhicule tracteur;

g. on vérifie si la fonction ABS est active, avec la condition selon laquelle l'étape (h) et les étapes suivantes sont exécutées uniquement lorsque la fonction ABS est inactive;

h. alors que le freinage est en cours, un contrôle est exécuté (59) sur la base de l'analyse de la pression de freinage ($p_{Anh}$) de la remorque, de la différence relative ($ds_A$) entre les vitesses moyennes de roues non motrices du véhicule tracteur et de la remorque ainsi que du freinage effectif ($Z_{ist}$) pour déterminer si une phase stationnaire de freinage est en cours;

i. un contrôle est effectué (61,62) pour déterminer si la différence (dds) entre la différence relative instantanée (dsA) entre les vitesses moyennes de roues non motrices du véhicule tracteur et de la remorsque, et la valeur moyenne courante ($ds_U$), actualisée sans freinage, de cette différence a une valeur absolue supérieure à une valeur de seuil EPSILON;

k. dans le cas de la présence d'une phase stationnaire de freinage (60) et lors du dépassement de EPSILON (62), à partir de la valeur de départ ($PHIA_0$) pour la relation de pression de freinage est calculée une variation (dPHIA) de la relation de la pression de freinage entre le véhicule tracteur et la remorque, qui est proportionnelle à ladite différence actuelle (dds) entre la différence relative instantanée ($ds_A$) entre les vitesses moyennes de roues non motrices du véhicule tracteur et de la remorque et la valeur moyenne courante ($ds_U$), actualisée sur le freinage, de cette moyenne;

l. la variation (dPHIA) est ajoutée à la valeur obtenue jusqu'alors ($PHIA_0$, PHIA);

m. le résultat ainsi adapté (PHIA) est mémorisé en tant que nouvelle valeur de commande pilote pour la relation de pression de freinage entre le véhicule tracteur et la remorque.

2. Procédé selon la revendication 1, caractérisé en ce
   - que ladite pression de freinage de référence ($p_{Zug}$) du véhicule tracteur est une valeur moyenne pondérée entre essieux.

3. Procédé selon la revendication 1, caractérisé en ce que
   - les étapes opératoires d. à m. sont exécutées dans le cadre d'une fonction ABS étendue d'un appareil de commande ABS électronique pour le véhicule tracteur.

4. Procédé selon la revendication 1, caractérisé en ce
   - qu'avant l'étape k., on prévoit l'étape supplémentaire suivante :
   n. on vérifie si, depuis la dernière adaptation du coefficient (PHIA) de la relation de la pression de freinage, un temps d'attente ($t_W$) s'est écoulé, avec la condition selon laquelle l'étape (k) et les étapes suivantes sont exécutées uniquement lorsque le temps d'attente ($t_W$) s'est écoulé.

5. Procédé selon la revendication 1, caractérisé en ce
   - qu'avant l'étape m., l'étape supplémentaire suivante est prévue :
   o. on vérifie si le freinage effectif ($Z_{ist}$) est inférieur à une valeur limite prédéterminée ($Z_{normale}$), avec la condition selon laquelle, dans le cas du dépassement, par valeurs inférieures, de ladite valeur limite ($Z_{normale}$), en tant que valeur d'adaptation respectivement une valeur moyenne (PHIA) de plus longue durée est formée à partir de plusieurs résultats successifs de l'étape 1.

6. Procédé selon la revendication 1, caractérisé en ce
   - que lors du pas k., la variation (dPHIA) est limitée chaque fois à une valeur qui correspond au produit de la relation de pression de freinage (PHIA) existant jusqu'alors et d'un coefficient limite ($f_Z$).

7. Procédé selon la revendication 1, caractérisé en ce

   - qu'avant l'étape k., l'étape supplémentaire suivante est prévue :

     p. les résultats pour les coefficients de relation de pression de freinage (PHIA) sont classés en fonction du freinage respectivement atteint ($Z_{ist}$) avant la mémorisation dans différentes gammes et sont sélectionnés respectivement de façon correspondante après le début d'un freinage en fonction de l'intensité de la demande de freinage en cours ($Z_{soll}$) et sont utilisés en tant que valeurs actuelles de sortie pour l'adaptation de la relation de pression de freinage.

8. Procédé selon la revendication 1, caractérisé en ce

   - qu'au cours de l'étape e., une comparaison de la pression de freinage ($p_{Anh}$), qui est obtenue pour la remorque, est exécutée et que, lorsque le résultat du calcul est situé en dehors d'une certaine largeur de bande prédéterminée de façon fixe, la valeur limite considérée de la bande est utilisée en tant que prédétermination de valeurs pour la pression de freinage actuelle ($p_{Anh}$) pour la remorque.

9. Procédé selon la revendication 1, caractérisé en ce

   - qu'il est mis en oeuvre en liaison avec un système de freinage ABS dans la remorque.

10. Procédé selon la revendication 9, caractérisé en ce

    - que le système de freinage ABS situé dans la remorque agit par voie électronique et que pour la mise en oeuvre du procédé, plusieurs signaux de vitesse de roues de la remorque sont préparés dans un appareil de commande ABS correspondant (43) dans la remorque et que la transmission du au moins un signal, qui est représentatif au moins des vitesses de roues d'un essieu de la remorque, au véhicule tracteur s'effectue par l'intermédiaire d'un appareil particulier d'interface (45).

11. Procédé selon la revendication 10, caractérisé en ce

    - que l'appareil d'interface (45) comprend un contrôleur CAN et que la transmission du au moins un signal représentatif au moins à des vitesses de rotation des roues d'un essieu de la remorque au véhicule tracteur s'effectue par l'intermédiaire de la même voie de transmission de signaux CAN, par l'intermédiaire de laquelle le contrôleur CAN permet également de transmettre des données de diagnostic concernant l'état des éléments de l'installation de freinage dans la remorque au véhicule tracteur.

Fig.1

Anhängefahrzeug

Zugfahrzeug

$$PHIA_0 = \frac{P_{Zug}}{P_{Anh.}}$$   — 50

$Z_{Soll}$ , $PHIA$   — 51

$$ds_A = \frac{V_{VA} - V_{Anh}}{V_{VA}}$$   — 52

$Z_{Soll} \neq 0$   — 53

J

N

$ds_U$ aus mittl. $ds_A$   — 54

55

$P_{Anh.} = P_{Zugw.}/PHIA$   — 56

ABS aktiv   — 57

J

N

$Z_{ist}$ aus $V_{VA}$   — 58

suche station. Phase
von $P_{Anh.}$, $Z_{ist}$, $ds_A$   — 59

neue stat. Phase
gefunden   — 60

N

J

$dds = ds_A - ds_U$   — 61

$|dds| > EPSILON$   — 62

N

J

$t_w$. abgelaufen
seit letzter Anpassung   — 63

N

J

$dPHIA \leq \begin{cases} c \cdot dds \\ f_z \cdot PHIA \end{cases}$   — 64

*Fig. 2*

$Z_{ist} < Z_{normal}$   — 65

N

J

$PHIA = PHIA + dPHIA$
langfristig Mittelwert   — 66

$PHIA = PHIA + dPHIA$   — 67

68

13